Europäisches Patentamt

(19) European Patent Office

Office européen des brevets

(11) Numéro de publication: **0 146 482**
**B1**

(12) **FASCICULE DE BREVET EUROPÉEN**

(45) Date de publication du fascicule du brevet:
**20.05.87**

(51) Int. Cl.⁴: **B 65 B 9/20,** B 65 B 61/14

(21) Numéro de dépôt: **84440047.3**

(22) Date de dépôt: **13.11.84**

(54) **Procédé et dispositif pour la pose de poignées ou l'éléments de rigidification sur une gaine tubulaire.**

(30) Priorité: **15.11.83 FR 8318257**
**25.06.84 FR 8410092**

(43) Date de publication de la demande:
**26.06.85 Bulletin 85/26**

(45) Mention de la délivrance du brevet:
**20.05.87 Bulletin 87/21**

(84) Etats contractants désignés:
**AT BE CH DE GB IT LI LU NL SE**

(56) Documents cité:
**FR-E-87 269**
**US-A-2 259 866**
**US-A-2 667 003**

(73) Titulaire: **SOCIETE GENERALE DES EAUX MINERALES DE VITTEL, B.P. 43, F-88800 Vittel (Vosges) (FR)**

(72) Inventeur: **Gautier, Raoul, Belmont sur Vair, F-88800 Vittel (FR)**
Inventeur: **Cazes, Michel, Rue Jean Bouin, F-88800 Vittel (FR)**

(74) Mandataire: **Poupon, Michel, 3, rue Thiers B.P. 247, F-88007 Epinal Cedex (FR)**

EP 0 146 482 B1

## Description

La présente invention a pour objet un procédé pour la fabrication d'un sachet en matière synthétique souple, contenant un liquide, muni d'un moyen de maintien et de rigidification, ledit sachet étant obtenu à partir d'un coussin rempli de liquide, ledit coussin étant lui-même réalisé en continu à partir d'une gaine de film synthétique enroulée sur un mandrin vertical, ledit moyen de préhension et de rigidification consistant essentiellement en une poignée rigide ou semi-rigide (connu du document US-A- 2 259 866).

L'invention a également pour objet un dispositif pour la réalisation d'un tel sachet.

Des sachets obtenus par des procédés à cheminement essentiellement vertical sont en eux-mêmes bien connus. Ils aboutissent pour la plupart à réaliser à un moment donné du processus, un simple coussin fermé par trois soudures latérales et rempli de liquide. Le problème posé consiste à conférer à ce coussin une forme et une stabilité permettant sa préhension et son usage, en particulier pour le versage de son contenu.

Les dispositifs proposés jusqu'à présent font pour la plupart appel à des soudures et découpes spécifiques et complexes de la partie inférieure du coussin intermédiaire destiné à être transformé en sachet.

On a déjà proposé dans le brevet US 2 259 866 un procédé de ce type dans lequel on rapporte des éléments de renforcement sur le film lui-même avant sa structuration en gaine.

Ce procédé nécessite un positionnement très précis des renforts et en outre un dispositif annexe d'application des renforts avec un élément formant contre-appui.

De même, le certificat d'addition français 87 269 decrit un dispositif pour conformer un sachet, mais avec un renfort intérieur, ce qui est inutilisable pour un conditionnement aseptique et ne peut en aucun cas donner une rigidité suffisante.

Le besoin se fait donc sentir de sachets obtenus par un procédé à cheminement vertical qui puissent être munis de moyens de préhension et de rigidification efficaces et peu onéreux.

Conformément à l'invention, ce résultat est obtenu avec un procédé pour la réalisation d'un sachet en matière synthétique souple contenant un liquide, muni d'un moyen de maintien et de rigidification, ledit sachet étant obtenu à partir d'un coussin rempli de liquide, ledit coussin étant lui-même réalisé en continu à partir d'une gaine de film synthétique enroulé sur un mandrin vertical, ledit moyen de préhension et de rigidification consistant essentiellement en une poignée rigide ou semi-rigide, caractérisée en ce que celle-ci est rapportée sur la gaine, lorsque celle-ci est le mandrin de la machine de formage.

Selon un mode avantageux de réalisation de l'invention, la poignée pourra se présenter sous la forme d'une bande rigide ayant de multiples sections possibles. La bande sera posée en continu sur la gaine lorsque celle-ci est sur le mandrin de formage d'une machine verticale. Des machines de ce type sont par exemple décrites dans le brevet français 2 071 075. Elles ne seront pas décrites plus en détail.

Le procédé de l'invention pourra être mis en oeuvre soit à partir d'un magasin de préparation et de stockage des poignées prêtes à être utilisées, soit par un dispositif intégré à la machine de conditionnement et débitant les poignées à partir d'une bobine avec formation et découpage successif de celles-ci. Ces différents procédés seront explicités ci-après.

Selon un autre mode de mise en oeuvre du procédé de l'invention, les poignées ou éléments de rigidification sont pris par aspiration à partir d'un magasin d'alimentation par un bras rotatif comportant une ventouse d'aspiration et des moyens de soudure et ledit bras rotatif vient appliquer après rotation ladite poignée ou élément de rigidification contre la gaine tubulaire positionnée sur le mandrin, la poignée ou élément de rigidification étant fixée à ladite gaine par des moyens de soudure.

L'invention a également pour objet un dispositif pour la mise en oeuvre de ce procédé. Selon un mode avantageux de mise en oeuvre on prévoiera que à chaque poignée ou élément de rigidification, réalisé par exemple en carton, on associera au niveau du magasin d'alimentation une feuille de matière synthétique percée d'un ou plusieurs trous permettant l'aspiration simultanée et la prise par le bras rotatif de la poignée et de la feuille y associée, la fixation ultérieure de la poignée sur la gaine s'opérant par le biais de ladite feuille.

On se sortirait pas du cadre de cette réalisation en prévoyant que la poignée ou élément de rigidification soit rendu ab initio directement soudable sur la gaine.

On comprendra mieux l'invention à l'aide de la description ci-après, faite en référence aux dessins annexés, donnés à titre d'exemple non limitatif, dans lesquels:
- la figure 1 est une vue en perspective d'un coussin muni d'une poignée et conforme a l'invention,
- les figures 2a, 2b, 2c, 2d, 2e, 2f, 2g sont des coupes selon A - A de la figure 1, selon plusieurs variantes de réalisation,
- la figure 3 rappelle schématiquement, le processus de conformation verticale d'une gaine,
- la figure 4 est une vue en coupe transversale selon B - B au niveau du mandrin de la machine de conformation, explicitant le principe du procédé de l'invention,
- la figure 5 est une représentation schématique d'un premier mode de mise en oeuvre du procédé de l'invention, à partir d'un magasin contenant les poignées préparées,
- la figure 6, est une représentation schématique d'un second mode de mise en oeuvre du procédé de l'invention, à partir d'une bobine,
- la figure 7, illustre une phase opératoire ultérieure de renforcement de la poignée,

- la figure 8 A est une vue schématique en plan de la phase de la prise d'une poignée ou élément de rigidification par le bras rotatif dans le magasin d'alimentation, selon un troisième mode de mise en oeuvre de l'invention,

- la figure 8 B est une vue schématique en plan de la phase de pose de la poignée ou élément de rigidification par le bras rotatif sur la gaine tubulaire.

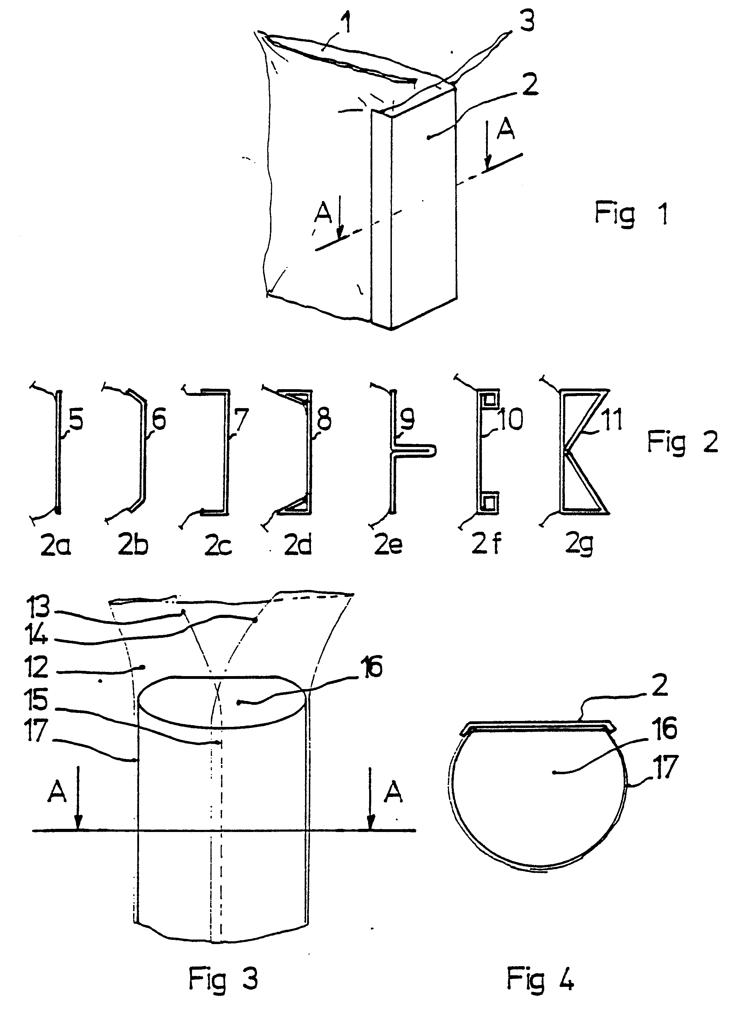

On se référera tout d'abord à la figure 1 qui représente le coussin (1) muni de poignées (2) que l'on cherche à obtenir. Il peut, ensuite être éventuellement utilisé comme sachet en l'état ou subir des traitements ultérieurs pour en particulier conformer le coin supérieur (3) de manière adéquate ainsi que le coin inférieur (4) opposé à la poignée (2).

Le coussin (1) est réalisé en un matériau synthétique souple en soi connu.

La poignée (2) pourra indifféremment, dans tout ce qui suit, être de toute composition, carton, matière plastique, etc... et de toute structure, ondulée, pleine, gaufrée, etc...

La poignée (2) pourra effecter diverses sections
- plate (5), à la figure 2a
- enveloppante à angles supérieurs à 90° (6) à la figure 2b
- enveloppante à angles droits (7), à la figure 2c
- enveloppante à angles droits à bords rabattus 8, à la figure 2d
- à pincement central (9) à la figure 2 e
- plates à extrémités rabattues à angle droit vers l'extérieur (10), à la figure 2 f
- plates à extrémités rabattues inclinées vers l'extérieur (11), à la figure 2 g

On comprendra que ces sections sont données à simple titre d'exemple non limitatif.

On a rappelé à la figure 3, le processus de réalisation d'une gaine tubulaire destinée à être remplie de liquide et débitée en coussins unitaires.

Un film (12) alimenté en continu à partir d'une bobine non représentée, passe sur une structure dite en col de cygne, qui permet de rapprocher les deux bouts (13, 14) du film qui sont ensuite soudés, selon une ligne continue (15) autour d'un mandrin vertical (16) pour former une gaine (17).

Selon l'invention, on applique à ce stade la poignée (2) en continu sur la gaine (17) lorsque cella-ci est encore sur le mandrin (16) qui sert d'appui.

Avantageusement le mandrin aura une section spécifique adaptée à chaque poignée (2) qui comportera sur sa face en regard de la gaine (17) une colle adéquate ou sera soudée.

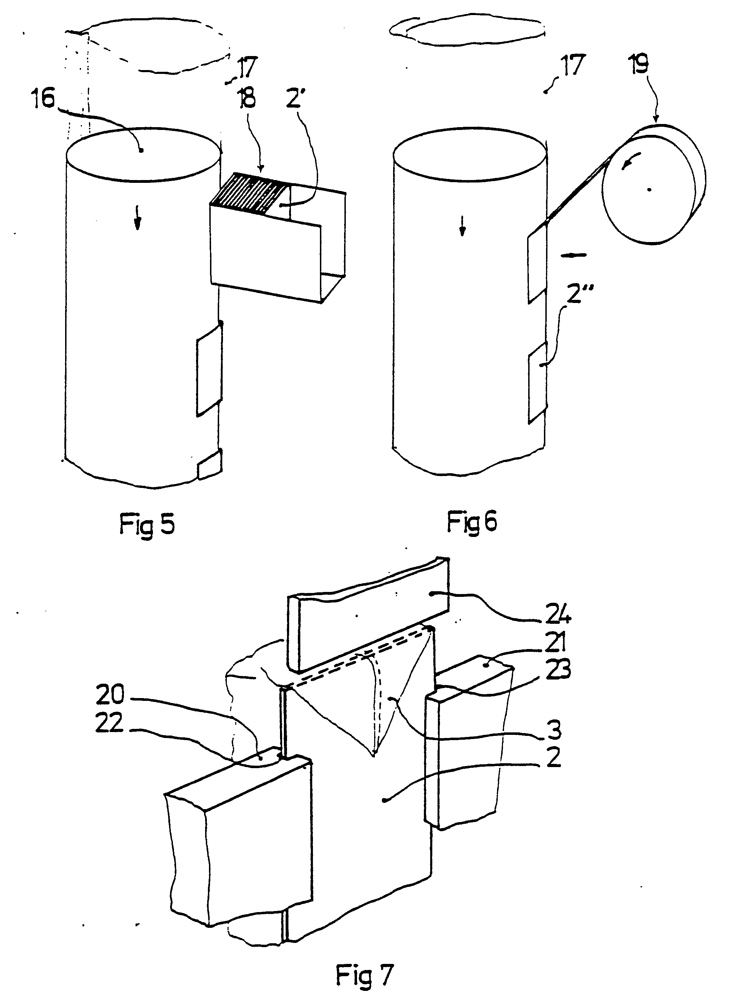

Selon le mode de mise en oeuvre de la figure 5, les poignées (2') préparées à l'avance sont alimentées à partir d'un magasin (18) et appliquées par pression sur la gaine (17) en prenant appui sur le mandrin (16). La poignée est présentée dans le magasin prête à être utilisée, c'est-à-dire coupée, pliée, formée.

Selon le mode de mise en oeuvre de la figure 6, la poignée (2'') est formée par un dispositif intégré dans la machine de conditionnement à partir d'une bobine (19). Le formage, la découpe en poignées individuelles, sont réalisés selon des procédés en eux-mêmes connus. La pose s'opère comme précédemment. En variante, la poignée peut être amenée horizontalement, au lieu de défiler dans le sens d'avance de la gaine (17).

A ce stade, que ce soit l'un ou l'autre des procédés décrits, on obtient la configuration de la figure 1, avec les variantes possibles pour les poignées.

Pour renforcer encore la poignée, on peut rabattre le coin supérieur, après remplissage du coussin muni de sa poignée et soudure du chant supérieur, comme illustré à la figure 7. La poignée étant un élément rigide il devient en effet alors possible de l'utiliser comme élément de guidage (de référence) et d'appui. Pour ce faire, on maintient la poignée (2) dans des machoires (20, 21) munies de rainures (22, 23). Puis un piston (24) se déplaçant verticalement vient appuyer le coin rabattu (3), contre la poignée, ledit coin ayant été au préalable muni d'un point de colle. Dans le cas de matériaux compatibles, le coin (3) et la poignée (2) peuvent être soudés.

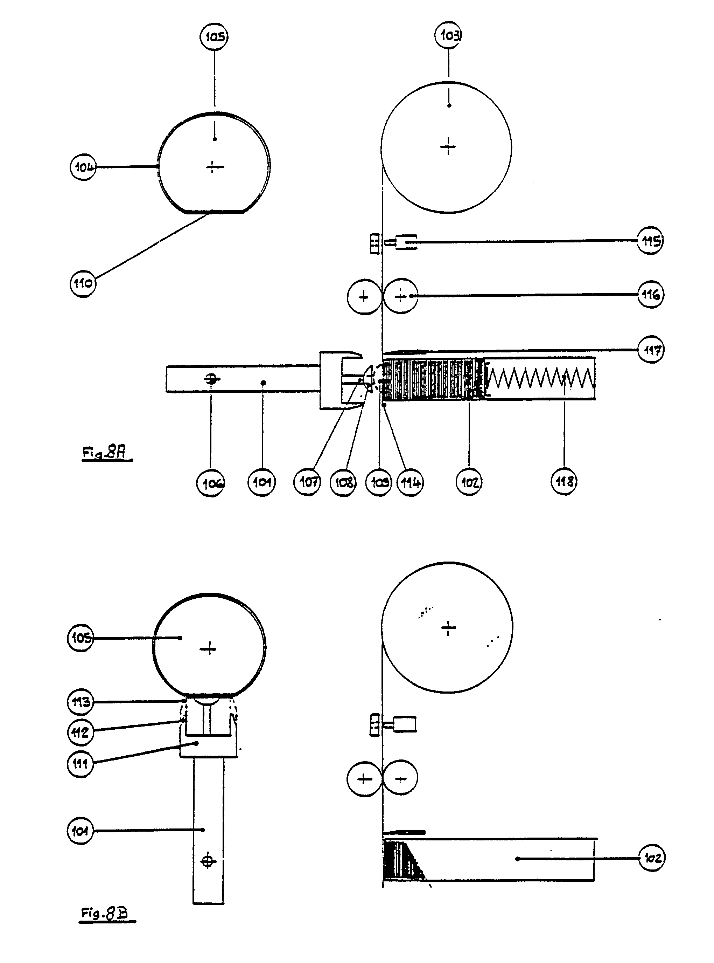

On se référera maintenant aux figures 8 A et 8 B.

Le dispositif utilisé pour la mise en oeuvre de ce procédé comporte essentiellement:
- un bras rotatif (101),
- un magasin d'alimentation (102).

Le but recherché est d'apposer une poignée ou élément de rigidification (ci-après désigné uniquement par "poignée") sur une gaine tubulaire (104) conformée autour d'un mandrin vertical (105).

Selon la caractéristique principale de cette réalisation le bras (101), monté rotatif autour d'un axe (106), comporte un moyen d'aspiration, par exemple une ventouse (107) pour la prise d'une poignée dans le magasin (102). La ventouse est montée mobile en translation selon l'axe longitudinal du bras (101). Ainsi lorsque le bras rotatif se présente en alignement devant le magasin (102), la ventouse est en position rentrée (108) par rapport au bras. Pour la prise d'une poignée, la ventouse avance en position (109) et vient s'appliquer contre la poignée qui se présente. L'aspiration étant établie, celle-ci entraîne avec elle la poignée lors de son retrait à nouveau en position (108), puis le bras rotatif (101) tourne selon un angle déterminé pour venir présenter la poignée en vis-à-vis du mandrin (105).

La poignée est alors appliquée contre le film (104) au niveau d'un méplat (110) du mandrin, par sortie de la ventouse hors du bras rotatif, en position analogue à la position (109) précitée.

Puis la poignée est fixée à la gaine par un moyen de soudure (111) également porté par le bras (101) et mobile en translation selon l'axe longitudinal de celui-ci, de la même manière que la ventouse.

Le moyen de soudure passe alors d'une position de retrait (112) à une position de soudure (113) qui permet la pose de la poignée sur la gaine. On procéde alors au retrait du moyen de soudure et de la ventouse, aspiration coupée, et le bras se représente devant le magasin (102) pour une nouvelle opération.

Selon un mode avantageux de mise en oeuvre on associera à chaque poignée dans le magasin une feuille de matière synthétique (114) qui sera disposée entre la ventouse et la poignée, juste avant la prise de celle-ci par la ventouse.

La prise de la poignée par la ventouse sera néanmoins possible en prévoyant dans la feuille un ou plusieurs trous réalisés au préalable par un poinçon (115).

Les feuilles sont obtenues à partir d'une bobine de film (103) et d'un entrainement pas à pas (116) du film.

Les feuilles sont découpées par un moyen de découpage (117) disposé juste avant le magasin. On s'assurera que la surface de la feuille (114) soit légèrement supérieure à celle de la poignée, de manière à déborder sur les côtés de celle-ci pour permettre la soudure sur le film (104).

> La feuille pourra être en tout matériau compatible par soudure avec celui du film (104). N'étant pas en contact avec le liquide contenu dans le sachet final, elle pourra être réalisée en un matériau moins noble que le sachet proprement dit.

Les poignées pourront être en tout matériau, par exemple en carton, et serviront également d'étiquettes d'identification du sachet et de son contenu. Dans le magasin (102), elles sont amenées l'une après l'autre par un système classique à ressort (118).

Bien entendu, l'ensemble du dispositif est indexé de manière à réaliser la descente de la gaine sur le mandrin pendant la prise d'une poignée par le bras rotatif, et à réaliser l'avance de la feuille plastique pendant le positionnement de la poignée sur la gaine tubulaire.

L'opération de découpe de la feuille (114) associée à la poignée s'opère conjointement à la prise par aspiration de celle-ci par la ventouse (107).

Tous ces éléments font intervenir des ensembles pneumatiques et mécaniques parfaitement connus de l'homme de l'art, et ils ne seront donc pas décrits plus en détail.

**Revendications**

1. Procédé pour la réalisation d'un sachet en matière synthétique souple contenant un liquide, muni d'un moyen de maintien et de rigidification (2), ledit sachet étant obtenu à partiir d'un coussin (1) rempli de liquide, ledit coussin étant lui-même réalisé en continu à partir d'une gaine (17) de film synthétique enroulé sur un mandrin vertical (16), ledit moyen de préhension et de rigidification consistant essentiellement en une poignée rigide ou semi-rigide (2), caractérisé en ce que celle-ci est rapportée sur la gaine (17) lorsque celle-ci est sur le mandrin (16) de la machine de formage.

2. Procédé selon la revendication 1 caractérisé en ce que le coin supérieur (3) du coussin est rabattu sur la poignée (2).

3. Procédé selon l'une des revendications 1 et 2, caractérisé en ce que les poignées ou éléments de rigidification sont pris par aspiration à partir d'un magasin d'alimentation (102), par un bras rotatif (101) comportant une ventouse d'aspiration (107) et des moyens de soudure (111) et que ledit bras rotatif vient d'appliquer après rotation ladite poignée ou élément de rigidification contre la gaine tubulaire (104) positionnée sur le mandrin (105), la poignée ou élément de rigidification étant fixée à la gaine par des moyens de soudure.

4. Procédé selon la revendication 3, caractérisé en ce que la ventouse (107) et les moyens de soudure (111) sont montés mobiles en translation longitudinale sur le bras rotatif (101) de manière à pouvoir prendre chaque poignée ou élément de rigidification puis à le positionner contre la gaine et à le souder sur celle-ci.

5. Procédé selon l'une quelconque des revendications 3 et 4 caractérisé en ce que l'on intercale entre la ventouse (107) et chaque poignée, juste avant la prise de celle-ci par la ventouse, une feuille de matériau synthétique (114) compatible par soudure avec le film de la gaine tubulaire (104), ladite feuille comportant un ou plusieurs trous pour permettre l'aspiration de la poignée par la ventouse.

6. Procédé selon l'une quelconque des revendications 3 et 5, caractérisé en ce que la descente de la gaine sur le mandrin est opérée pendant la prise d'une poignée par le bras rotatif, que l'avance de la feuille de matière synthétique et la prise de la poignée suivante sont réalisées pendant le positionnement de la poignée sur la gaine tubulaire.

7. Procédé selon l'une quelconque des revendications 5 et 6 caractérisé en ce que la feuille (111) est découpée conjointement à la prise par aspiration de la poignée associée par la ventouse (107).

8. Dispositif pour mise en oeuvre du procédé selon l'une quelconque des revendications 1 à 7 comportent essentiellement une machine de conformation et de conditionnement à cheminement vertical, munie d'un mandrin (16), une alimentation en poignées (2', 2'') à partir d'un magasin (18) ou d'une bobine (19) caractérisé en de ce qu'il comporte des moyens d'application par pression des poignées (2', 2'') sur la gaine de film (17).

9. Dispositif selon la revendication 8 caractérisé en ce que le coin (3) est rabattu sur la poignée (2) par un piston (24) se déplaçant verticalement, la poignée (2) étant maintenue dans des mâchoires (20, 21) munies de rainures (22, 23).

10. Dispositif selon la revendication 8 caractérisé en ce qu'il comporte essentiellement un bras (101) monté rotatif autour d'un axe (106), muni d'une part d'une ventouse (107) pour la prise d'une poignée ou élément de rigidification dans un magasin (102), ladite ventouse étant montée mobile en translation selon l'axe longitudinal dudit bras et d'autre part de moyens de soudure (111) montés mobiles en translation selon l'axe longitudinal dudit bras.

11. Dispositif selon la revendication 10, caractérisé en ce qu'il comporte en outre un ensemble d'alimentation en film destiné à former les feuilles (114) composé d'une bobine (103), d'un poinçon (115), d'un entrainement pas à pas (116) du film et d'un moyen de découpe (117) disposé avant le magasin (102).

**Claims**

1.) Process for the formation of a sachet of flexible synthetic material containing a liquid, equipped with a supporting and stiffening means (2), the said sachet being obtained from a liquid-filled cushion (1), the said cushion being itself made continuously from a sheath (17) of synthetic film wound on a vertical former (16), the said grasping and stiffening means consisting essentially of a rigid or semi-rigid handle (2), characterised in that the handle is attached to the sheath (17) when the latter is on the former (16) of the shaping machine.

2.) Process according to Claim 1, characterised in that the upper corner (3) of the cushion is turned down over the handle (2).

3.) Process according to one of Claims 1 and 2, characterised in that the handles or stiffening elements are taken by suction from a supply magazine (102) by a rotary arm (101) comprising a suction cup (107) and welding means (111) and in that the said rotary arm after rotation comes to apply the said handle or stiffening element against the tubular sheath (104) positioned on the former (105), the handle or stiffening element being fixed to the sheath by welding means.

4.) Process according to Claim 3, characterised in that the suction cup (107) and the welding means (111) are mounted for longitudinal translational movement on the rotary arm (101) in such manner as to be able to take each handle or stiffening element and then position it against the sheath and to weld it thereto.

5.) Process according to any one of Claims 3 and 4, characterised in that between the suction cup (107) and each handle, just before the latter is taken by the suction cup, there is interposed a sheet of synthetic material (114) compatible with welding with the film of the tubular sheath (104), the said sheet comprising one or more holes to permit the suction of the handle by the suction cup.

6.) Process according to any one of Claims 3 and 5, characterised in that the descent of the sheath on to the former is effected during the taking of a handle by the rotary arm, in that the advance of the sheet of synthetic material and the taking of the next handle are effected during the positioning of the handle on the tubular sheath.

7.) Process according to any one of Claims 5 and 6, characterised in that the sheet (111) is cut out in conjunction with the taking by suction of the associated handle by the suction cup (107).

8.) Apparatus for carrying out the process according to any one of Claims 1 to 7, comprising essentially a vertically progressing shaping and make-up machine equipped with a former (16) a supply of handles (2', 2'') from a magazine (18) or a reel (19), characterised in that it comprises means for pressure application of the handles (2', 2'') to the film sheath (17).

9.) Apparatus according to Claim 8, characterised in that the corner (3) is turned down on the handle (2) by a vertically moving piston (4), the handle (2) being retained in jaws (20, 21) equipped with grooves (22, 23).

10.) Apparatus according to Claim 8, characterised in that it comprises essentially an arm (101) mounted for rotation about an axis (106) and equipped for one part with a suction cup (107) for the taking of a handle or stiffening element from a magazine (102), the said cup being mounted for translational movement in the direction of the longitudinal axis of the said arm, and for the other part with welding means (111) mounted for translational movement in the direction of the longitudinal axis of the said arm.

11.) Apparatus according to Claim 10, characterised in that it further comprises a film supply assembly for film intended to form the sheets (114), composed of a reel (103), a punch (115), a step-by-step drive (116) for the film and a cutting means (117) disposed before the magazine (102).

**Patentansprüche**

1. Verfahren zur Herstellung eines eine Flüssigkeit enthaltenden Beutels aus synthetischem, flexiblem Material, der über ein Halte- und Versteifungsmittel (2) verfügt, wobei der Beutel ausgehend von einem mit Flüssigkeit gefüllten Kissen (1) erhalten wird und das Kissen selbst kontinuierlich ausgehend von einer Hülle (17) aus einer synthetischen Folie hergestellt ist, die einen vertikalen Dorn (16) umwickelt, und wobei das Greif- und Versteifungsmittel im wesentlichen aus einem steifen oder halbsteifen Handgriff (2) besteht, dadurch gekennzeichnet, daß dieser auf die Hülle (17) aufgebracht wird, wenn sich diese auf dem Dorn (16) der Bearbeitungsmaschine befindet.

2. Verfahren nach Anspruch 1, dadurch gekennzeichnet, daß die obere Ecke (3) des Kissens auf den Handgriff (2) umgeschlagen ist.

3. Verfahren nach einem der Ansprüche 1 und 2, dadurch gekennzeichnet, daß die Handgriffe oder Versteifungselemente durch Ansaugen aus einem Zuführungsmagazin (102) mit Hilfe eines drehbaren Armes (101) erfaßt werden, der einen Saugnapf (107) und Schweißeinrichtungen (111) aufweist, und daß der drehbare Arm nach der Drehung den Handgriff oder das Versteifungselement gegen die auf dem Dorn (105) positionierte schlauchförmige Hülle (104) aufbringt, wobei der Handgriff oder das Versteifungselement an der Hülle mittels der Schweißeinrichtung befestigt wird.

4. Verfahren nach Anspruch 3, dadurch gekennzeichnet, daß der Saugnapf (107) und die Schweißeinrichtung (111) in Längsrichtung verschiebbar so auf dem drehbaren Arm (101) befestigt sind, daß sie jeden Handgriff oder jedes Versteifungselement erfassen können und es danach gegen die Hülle positionieren und auf dieser festschweißen können.

5. Verfahren nach einem der Ansprüche 3 und 4, dadurch gekennzeichnet, daß man zwischen dem Saugnapf (107) und jedem Handgriff unmittelbar vor dessen Erfassung durch den Saugnapf ein Blatt aus einem synthetischen Material (114) einfügt, das schweißkompatibel mit der Folie der schlauchförmigen Hülle (104) ist, wobei das Blatt ein oder mehrere Löcher aufweist, um das Ansaugen des Handgriffs durch den Saugnapf zu gestatten.

6. Verfahren nach einem der Ansprüche 3 und 5 dadurch gekennzeichnet, daß die Abwärtsbewegung der Hülle auf dem Dorn während des Erfassens eines Handgriffs durch den drehbaren Arm erfolgt und daß der Vorschub des Blattes aus synthetischem Material und das Erfassen des nachfolgenden Handgriffs während der Positionierung des Handgriffs auf der schlauchförmigen Hülle erfolgen.

7. Verfahren nach einem der Ansprüche 5 und 6, dadurch gekennzeichnet, daß das Blatt (111) zusmmen mit dem Erfassen durch Ansaugen des Handgriffs ausgeschnitten wird, der dem Saugnapf (107) zugeordnet ist.

8. Vorrichtung zur Durchführung des Verfahrens nach einem der Ansprüche 1 bis 7, die im wesentlichen eine Herstellungs- und Füllmaschine mit vertikalem Vorschub umfaßt mit einem Dorn (16) versehen ist und eine Speisung mit Handgriffen (2', 2'') ausgehend von einem Magazin (18) oder einer Rolle (19) aufweist, dadurch gekennzeichnet, daß sie Vorrichtungen zum Anbringen der Handgriffe (2 , 2'') auf der Folie (17) durch Druckanwendung aufweist.

9. Vorrichtung nach Anspruch 8, dadurch gekennzeichnet, daß die Ecke (3) auf den Handgriff (2) mit Hilfe eines Kolbens (24) umgeschlagen wird, der sich vertikal verschiebt, wobei der Handgriff (2) in Klammern (20; 21) gehalten ist, die über Nuten (22, 23) verfügen.

10. Vorrichtung nach Anspruch 8, dadurch gekennzeichnet, daß sie im wesentlichen einen Arm (101) umfaßt, der drehbar um eine Achse (106) befestigt ist und einerseits mit einem Saugnapf (107) für das Erfassen eines Handgriffes oder Versteifungselementes in einem Magazin (102) ausgestattet ist, wobei der Saugnapf entlang der Längsachse des Armes verschiebbar beweglich befestigt ist, und daß der Arm andererseits mit Schweißeinrichtungen (111) versehen ist, die in Richtung der Längsachse des Armes verschiebbar beweglich befestigt sind.

11. Vorrichtung nach Anspruch 10, dadurch gekennzeichnet, daß sie zusätzlich eine Zuführungseinheit für eine Folie die bestimmt ist die Blätter (114) zu bilden, aufweist die aus einer Spule (103), einer Stanze (115), einer schrittweise arbeitenden Vorschubeinheit (116) für die Folie und einer vor dem Magazin (102) angeordneten Schneideinrichtung (117) besteht.

Fig 1

Fig 2

Fig 3

Fig 4

Fig 5

Fig 6

Fig 7

**0 146 482**

Fig.8A

Fig.8B

5